# EUROPEAN PATENT APPLICATION

(11) **EP 1 686 492 A1**
(43) Date of publication of application: **02.08.2006**
(21) Application number: 05100498.4
(22) Date of filing: 26.01.2005
(51) Int. Cl.: G06F 17/27

(54) **Method and Apparatus for Correction of Spelling Errors in Text Composition**

(71) Applicant: Research In Motion Limited, Waterloo, Ontario N2L 3W8 (CA)
(72) Inventor: Plumb, Marc, Waterloo, Ontario N2L 5Z5 (CA)
(74) Representative: Rickard, David John

(57) **Abstract**

Method and apparatus for correction of spelling errors in text composition is provided. Correctly spelled words may be determined for an incorrectly spelled word in accordance with a common error approach. Corrections to the incorrectly word are applied using common typographical and spelling errors. Resulting words which are correctly spelled may be offered as replacements or automatically used to replace the incorrectly word. Corrections may be applied in response to a frequency of the error in text composition to generate correct words that are more likely to be the word intended to be composed. The specific order of application may be configurable to meet a user's preference or a learned behavior for a user.

## Description

The present invention relates generally to text composition and particularly to correcting spelling errors.

Users of computers and other electronic devices such as wireless mobile devices, personal digital assistants (PDAs) etc. often compose text using the devices. The text may be a command for operating the device, a message for communicating using the device or part of a document or other object for storing, printing, etc. using the device.

Spelling errors are a common occurrence. Some devices provide spell checking tools to identify portions of the text, typically words, which contain spelling errors. Words from the text are determined and compared to a dictionary. Words that are not found in the dictionary are indicated as spelling errors. Some such devices may provide correction assistance, displaying one or more suggested words to replace the misspelled word. Still other devices automatically correct the misspelled word, determining a correctly spelled word to replace the detected error.

Efficiently determining one or more likely words to replace a misspelled word can be problematic. Some determination methods adopt a shortest editable distance approach which focuses on the fewest insertions or deletions to amend the misspelled word to a correctly spelled word. Others prioritize the commonality of words such that a more commonly used word among a list of possible replacement words is suggested first. The shortest editable distance approach requires a determination of the number of edits for each word. In the case of the commonality approach, a measure of each word's commonality must be maintained in association with the word such as in a dictionary. Each of these methods requires an ordering of the candidate words following or at best during the determination of the word as a possible spelling correction. Storing the dictionary or correctly spelled words, and candidate corrections for misspelled words can use significant storage space.

Accordingly, there is a resulting need for a method and apparatus that addresses one or more of these shortcomings.

### SUMMARY

There is provided, among other things, a method and apparatus for correction of spelling errors in text composition. Correctly spelled words may be generated for replacing an incorrectly spelled word in accordance with a common error approach. Corrections to the incorrect word are applied using common typographical and spelling errors. Resulting words which are correctly spelled may be offered as replacements or automatically used to replace the incorrect word. Corrections may be applied in an order that is responsive to the frequency or commonality of the type of typographical or spelling errors to generate correct words that are more likely to be the word intended to be composed. This is done based on the frequency of the type of error, without considering the specific word. The specific order of application of the corrections may be configurable to meet a user's preference or a learned behavior for a user. More common error corrections may be applied first and candidates suggested. Further error corrections may be applied, on user demand.

In accordance with a first aspect of the invention, there is provided a method for correcting a misspelled word in text composition comprises: applying one or more corrections to the misspelled word to generate a candidate replacement for replacing the misspelled word, each of said corrections defined in accordance with common errors for text composition; verifying the spelling correctness of the candidate replacement; and providing said candidate replacement to replace the misspelled word in response to said verifying.

In accordance with a second aspect of the invention, there is provided an apparatus comprising: a storage medium having stored therein a plurality of programming instructions and a processor coupled to the storage medium to execute the programming instructions to enable the apparatus to correct a misspelled word in text composition, said programming instructions enabling the apparatus to: apply one or more corrections to the misspelled word to generate a candidate replacement for replacing the misspelled word, each of said corrections defined in accordance with common errors for text composition; verify the spelling correctness of the candidate replacement; and provide said candidate replacement to replace the misspelled word in response to said verifying.

These and other aspects will be apparent to persons of ordinary skill in the art including a computer program product such as a machine readable medium storing computer program code executable to perform a method aspect of the invention.

### BRIEF DESCRIPTION OF THE DRAWINGS

Embodiments of present invention will now be described by way of example with reference to attached figures, wherein:

Fig. 1 is a block diagram which illustrates pertinent components of a wireless communication device adaptable in accordance with an embodiment of the invention and which communicates within a wireless communication network;

Fig. 2 is a detailed diagram of a preferred wireless communication device of Fig. 1;

Fig. 3 is a flowchart of operations for a spell checker in accordance with an embodiment of the invention;

Fig. 4 is a flowchart of operations for a word correction generator in accordance with an embodiment of the invention; and

Fig. 5 is a block diagram of an example of a memory component of a mobile station of Fig. 1 or 2.

### DETAILED DESCRIPTION

As previously noted, users of electronic devices such as computers and wireless mobile devices often compose text using such devices. Wireless mobile devices are frequently used to compose and send email, text messages (e.g. IM, SMS) chat, etc. Text may also be composed for calendar events, tasks or notes, etc. stored to or managed by these devices. A spell checking and correcting function on such a device is advantageous.

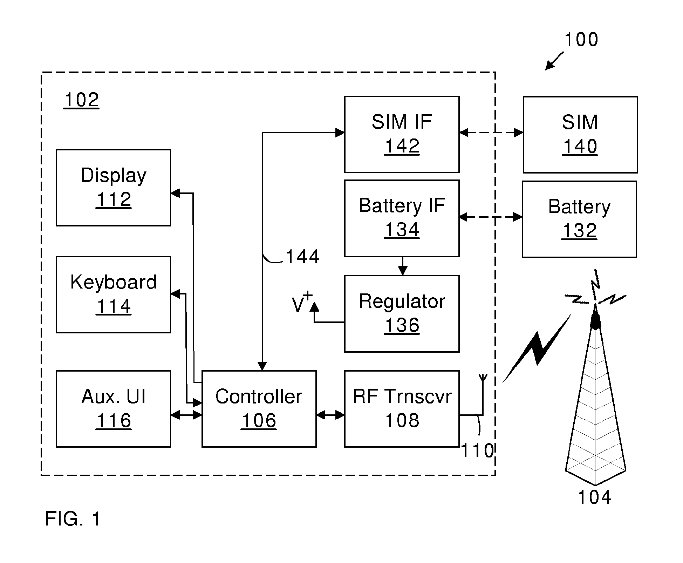

Fig. 1 is a block diagram of a communication system 100 which includes a wireless mobile device namely a mobile station 102 which communicates through a wireless communication network 104 symbolized by a station. Mobile station 102 preferably includes a visual display 112, a keyboard 114, and perhaps one or more auxiliary user interfaces (UI) 116, each of which are coupled to a controller 106. Controller 106 is also coupled to radio frequency (RF) transceiver circuitry 108 and an antenna 110.

Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad, full alphanumeric keyboard, or full or condensed QWERTY keypad, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from the wireless network 104 over a wireless link via antenna 110. RF transceiver circuitry 108 performs functions similar to those of a base station and a base station controller (BSC) (not shown), including for example modulation/demodulation and possibly encoding/decoding and encryption/decryption. It is also contemplated that RF transceiver circuitry 108 may perform certain functions in addition to those performed by a BSC. It will be apparent to those skilled in art that RF transceiver circuitry 108 will be adapted to particular wireless network or networks in which mobile station 102 is intended to operate.

Mobile station 102 includes a battery interface (IF) 134 for receiving one or more rechargeable batteries 132. Battery 132 provides electrical power to electrical circuitry in mobile station 102, and battery IF 132 provides for a mechanical and electrical connection for battery 132. Battery IF 132 is coupled to a regulator 136 which regulates power to the device. When mobile station 102 is fully operational, an RF transmitter of RF transceiver circuitry 108 is turned on only when it is sending to network, and is otherwise turned off or placed in a low-power mode to conserve power. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface (IF) 142. SIM 140 is one type of a conventional "smart card" used to identify an end user (or subscriber) of mobile station 102 and to personalize the device, among other things. Without SIM 140, the mobile station terminal is not fully operational for communication through the wireless network. By inserting SIM 140 into mobile station 102, an end user can have access to any and all of his/her subscribed services. SIM 140 generally includes a processor and memory for storing information. Since SIM 140 is coupled to SIM IF 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including date book (or calendar) information and recent call information.

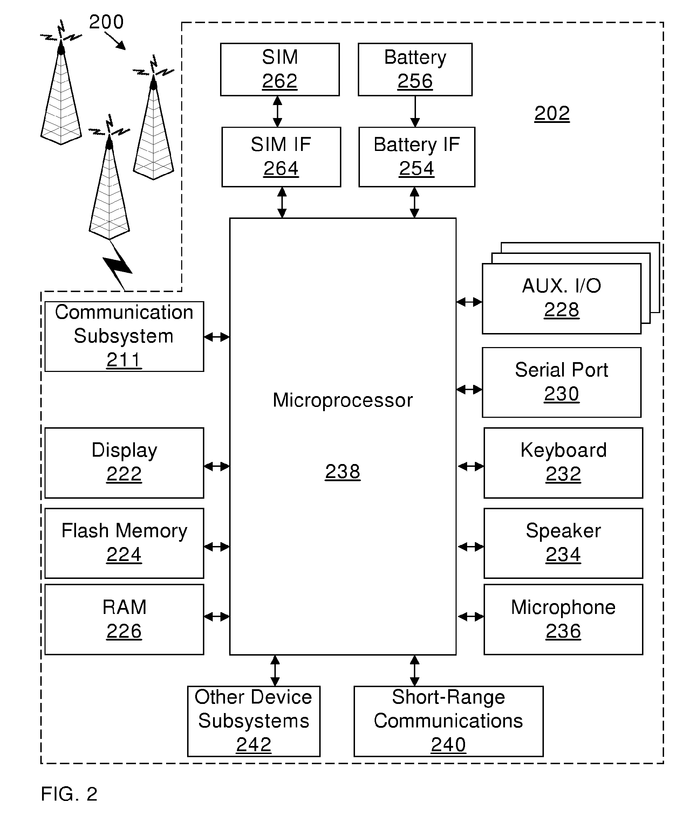

Mobile station 102 may consist of a single unit, such as a data communication device, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of Fig. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of Fig. 2.

Fig. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver stations 200 within its geographic coverage area.

Mobile station 202 will normally incorporate a communication subsystem 211, which includes a receiver, a transmitter, and associated components, such as one or more (preferably embedded or internal) antenna elements and, local oscillators (LOs), and a processing module such as a digital signal processor (DSP) (all not shown). Communication subsystem 211 is analogous to RF transceiver circuitry 108 and antenna 110 shown in Fig. 1. As will be apparent to those skilled in field of communications, particular design of communication subsystem 211 depends on the communication network in which mobile station 202 is intended to operate.

Network access is associated with a subscriber or user of mobile station 202 and therefore mobile station 202 requires a Subscriber Identity Module or "SIM" card 262 to be inserted in a SIM IF 264 in order to operate in the network. SIM 262 includes those features described in relation to Fig. 1. Mobile station 202 is a battery-powered device so it also includes a battery IF 254 for receiving one or more rechargeable batteries 256. Such a battery 256 provides electrical power to most if not all electrical circuitry in mobile station 202, and battery IF 254 provides for a mechanical and electrical connection for it. The battery IF 254 is coupled to a regulator (not shown) which provides power V+ to all of the circuitry.

Mobile station 202 includes a microprocessor 238 (which is one implementation of controller 106 of Fig. 1) which controls overall operation of mobile station 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in Fig. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, will normally be installed on mobile station 202 during its manufacture. A preferred application that may be loaded onto mobile station 202 may be a personal information manager (PIM) application having the ability to organize and manage data items relating to the user such as, but not limited to, instant messaging (IM), email, calendar events, voice mails, appointments, and task items. PIM and other functions are presented to a user via a graphical user interface (GUI) component. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network 200, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an email message, or web page download will be processed by communication subsystem 211 and input to microprocessor 238. Microprocessor 238 will preferably further process the signal for output to display 222, to auxiliary I/O device 228 or both. A user of mobile station 202 may also compose data items, such as email messages, for example, using keyboard 232 in conjunction with display 222 and possibly auxiliary I/O device 228. Keyboard 232 is preferably a telephone type keypad, full alphanumeric keyboard or full or condensed QWERTY keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some

### examples.

Serial port 230 in Fig. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of Fig. 2 is an additional optional component which provides for communication between mobile station 202 and different systems or devices, which need not necessarily be similar devices. For example, subsystem 240 may include an infrared device and associated circuits and components, or a Bluetooth™ communication module to provide for communication with similarly-enabled systems and devices. Bluetooth™ is a registered trademark of Bluetooth SIG, Inc.

In accordance with an embodiment of the invention, mobile station 202 is configured for sending and receiving data items and includes a PIM for organizing and managing data items relating to the user such as, but not limited to, instant messaging (IM), email, calendar events, calendar appointments, and task items, etc. By way of example, mobile station 202 is configured for voice (which may include push to talk over cellular (POC)) and data services, voice mail service, email service, SMS and chat services to which the user subscribes. To provide a user-friendly environment to control the operation of mobile station 202, PIM together with the operation system and various software applications resident on the station 202 provides a GUI having a main screen at one or more subscreens, menus, dialogs or other GUI display components from which to access and control various services via applications stored on said device or available to it.

One feature of the GUI for mobile station 202, in accordance with an embodiment of the invention, is a spell checking and correcting feature for correcting misspelled words in text composed using the station 202. Persons of ordinary skill in the art will appreciate that such a feature may be adapted to spell check text otherwise available to the station 202.

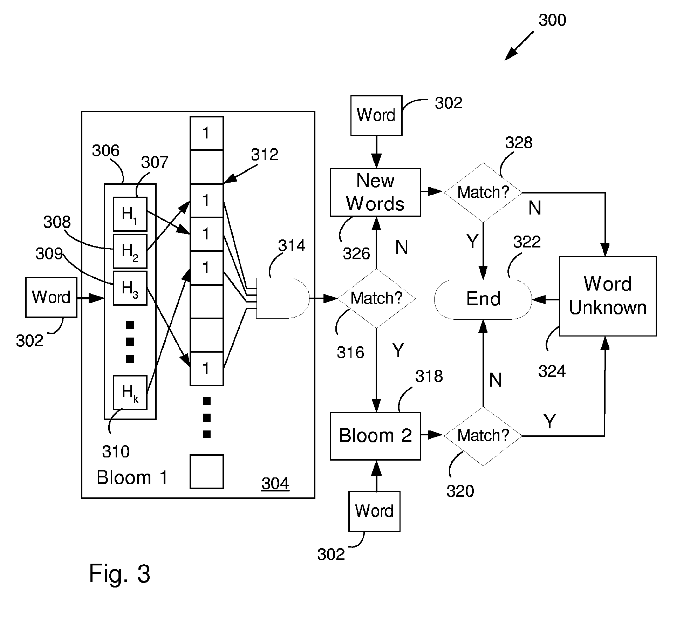

Fig. 3 illustrates a flowchart of operations 300 for determining whether a word portion 302 of a text composition is misspelled. Word 302 is determined from the text. Depending on the context of the composition, this may be accomplished in a variety of manners well known to persons of ordinary skill in the art. Word 302 is verified against dictionary 304 comprising a first bloom filter (Bloom 1). Dictionary 304 comprises a hash generator portion 306 comprising k hash generators H₁, H₂, H₃ ... Hₖ, (307, 308, 309 and 310) and an N-bit bit vector 312.

Bloom filters provide a constant space storage mechanism for determining presence of information in a group such as words in a dictionary. The bit vector is pre-populated with correctly spelled words by applying each of the k hash generators to each word to be added to the dictionary and setting (or alternatively unsetting) the respective appropriate bits of the vector indicated by the hashes. To determine if a particular word is in the dictionary (i.e. it is likely a correctly spelled word), the hashes are applied to the particular word and the appropriate bits of the bit vector are checked. If all checked bits are set, AND gate 314 will present as true (provided the bits are set to 1 in the dictionary when it is populated). If the bits are unset when the vector is pre-populated, the AND gate may be replaced by an NOR (Not-OR) gate and evaluated appropriately.

At 316, a determination is made whether the word is in the dictionary 304. As Bloom filters may generate false positives whereby an incorrectly spelled word hashes to the same bits as a correctly spelled word, further determining is generally performed to reduce the incidence of false positives. False negatives ought not to occur if the filter was populated using the word. However, a correctly spelled word that has not been added to the filter will likely appear as a misspelled word.

At 318, a second dictionary (Bloom 2) is checked with word 302 where Bloom 2 is populated with known spelling errors that generate a positive match to Bloom 1. At 320, if there is a match to Bloom 2, via Yes branch to 324, a misspelled word is determined and operations 300 end at 322. If there is no match at 320, via No branch to 322, operations end with a correctly spelled word.

From 316, if word 302 was not found in Bloom 1, via No branch to 326, word 302 may be compared to a list of new words not yet added to Bloom 1. Such may be a list determined by a user, for example. Periodically, such a list may be applied to populate Bloom 1. By way of example, the list of new words may comprise the 10 most recent words indicated as correctly spelled by a user. As a next word is added, the oldest word from the list is applied to Bloom 1 to populate the bit vector 312 accordingly. Care should be taken not to over populate bit vector 312 thus avoiding false positives.

At 328, a determination is made whether word 302 is matched in new words 326. If yes, the word is correctly spelled and operations end at 322. If no, the word is unknown (i.e. misspelled) at 324 and operations end. Alternatively, operations 300 may be configured (e.g. at 324) to permit unknown words to be added to new words 326 upon user input as described but not shown.

Persons of ordinary skill in the art will appreciate that a 100,000 word dictionary may be configured as a bloom filter having fewer than 1:10,000 error rate using a 240 kB bit vector and 14 hashes. The hashes may be implemented as simple cyclic redundancy checksum functions, each using different generator polynomials on word 302. Look-up tables may be used to compute the hash values. Considerations of hash table size and instructions per hash may be balanced to determine a specific implementation. Such may be important on a wireless mobile device where available storage to a memory (e.g. flash memory 224) may be relatively small.

Though operations 300 are described as requiring the predetermination of word 302 and then the determination of the hashes for the word, persons of ordinary skill in the art will appreciate that the hashes may be computed as each letter of a word is input. However, if a user makes a correction, the hashes will generally require recalculation. As a user types a word, it is not expected that the intermediate hashes will match. Only when the user ends a word, by typing space, return, or punctuation, should the hash be checked against the bit vector 312.

A further optimization that persons of ordinary skill in the art will appreciate is that not all hashes need to be calculated or checked against the bit vector. As soon as a hash which does not map to set bit is determined, the word is not in the dictionary and operations may proceed to step 316 and thereafter 326.

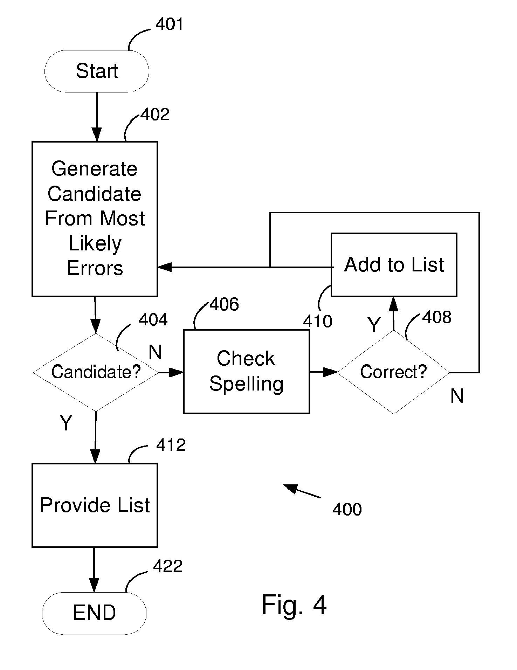

Fig. 4 illustrates operations 400 for generating replacement candidates for a misspelled word such as unknown word 324 from Fig. 3.

Following start 401, such as the identification of a misspelled word 324 of Fig. 3, a candidate replacement is generated for consideration as a replacement for the misspelled word. The candidate replacement is generated by applying one or more corrections to the misspelled word. The corrections are defined in accordance with common errors for text composition. The common errors may comprise typographical errors and spelling errors. Typographical errors are generally those occurring due to a mistake in physically entering the word using keyboard 232 or other input device. Often the input is not intended. Spelling errors are generally those occurring when a user does not know how to spell the word or is mistaken as to the correct spelling.

Common typographical errors include:
· Transposed letters ("beleive")
· Replaced adjacent letter on keyboard ("bekieve")
· Extra adjacent letter ("belkieve")
· Missing space ("alot")
· Missing double letter ("paralel")
· Extra double letter ("belleive")
· Missing capitals ("canada")

Other typographicals include:
· Extra letter ("belxieve")
· Missing/extra "s" ("Loose lip sink ships")

Common English spelling mistakes include:
· Similar sounding letter ("thay") (a/e, i/y, x/z/s, p/f/v, j/g, c/k, c/s)
· Missing similar sounding letter pair ("yong") (t/th, p/ph/th, o/ou, a/ae, i/ie, y/ie)
· Extra similar sounding letter pair ("colour") (ph/th, ie/ei)
· Missing silent "e" ("believ")

Preferably the corrections are selected and applied in an order that is responsive to the frequency of such errors in text composition. Thus the frequency of the error is an indicator of the likeliness that the candidate is the correct (i.e. intended) word. Note that frequency may vary with the type of electronic device used. An electronic device with a reduced keypad or keyboard and another with a full QWERTY keyboard may produce typographical errors with differing frequencies. Keyboard layout will have a different effect on specific adjacent letter errors. However, typographical errors are language independent.

At step 404 a determination is made whether there is a candidate replacement to verify. If there is a candidate, operations 400 move to step 406. The candidate replacement is spellchecked, verified as a correctly spelled word against a dictionary such as described with reference to Fig. 3. If the word is correctly spelled (i.e. it is in the dictionary), at step 408, operations move to step 410 to add the candidate to a list of replacements to provide to replace the misspelled word. If it is unknown at step 408, or added at step 410, operations move back to step 402 to generate a further candidate from the various corrections, if any remain.

Once all candidate replacements are generated and verified candidate replacements added to the list, via yes branch at step 404, the verified candidate replacements may be provided (step 412) for replacing the misspelled word. To replace the word, the GUI component may display the list in a selection menu or other dialog interface and a user permitted to select from among the list. Alternatively, a candidate replacement may be automatically chosen from the list.

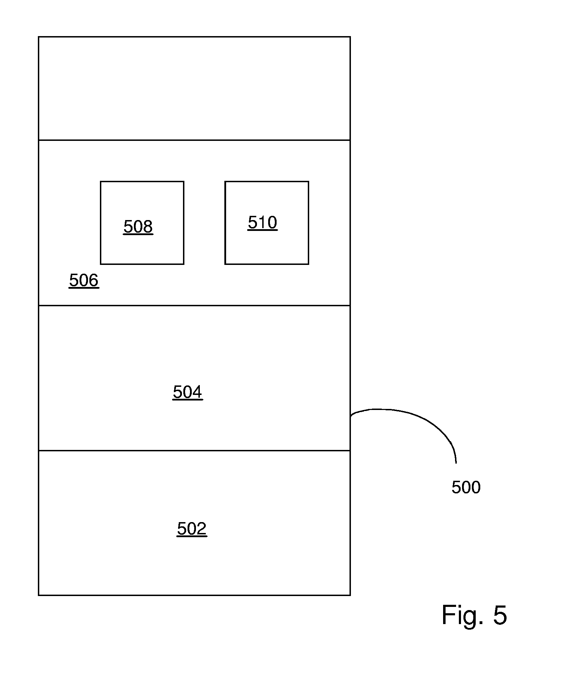

Fig. 5 illustrates a block diagram of a memory 500 coupled to mobile station 202 such a RAM, Flash or other storage device in accordance with an embodiment of the invention. The memory 500 has various software components for controlling the station 202. In accordance with an embodiment of the invention, mobile station 202 is intended to be a multi-tasking wireless communications device configured for sending and receiving data items and for making and receiving voice calls. To provide a user-friendly environment to control the operation of station 202, as previously described, an operating system ("O/S") 502 resident on the station 202 provides a basic set of operations for supporting various applications typically operable through a graphical user interface ("GUI") 504. For example, O/S 502 provides basic input/output system features to obtain input from the auxiliary I/O 228, keyboard 232, and the like, and for facilitating output to the user. In accordance with an embodiment of the invention, there are provided software components 506, including programming instructions and data, for correction of misspelled words in text. Such software components may include a spell checking component 508 and a correction component 510 implementing the operations such as previously described. One or more applications for managing communications or for providing personal digital assistant like functions may also be included (not shown). Though illustrated as distinct separate items within memory 500, persons of ordinary skill in the art will appreciate that items 502 - 510 therein may be linked in a variety or manners and overlap such that bright-line distinctions are not always possible. Parts of the correction component 510 may rely on parts of GUI 504 and vice versa, for example.

Thus, in an embodiment of the invention, wireless mobile station 202 includes computer executable programmed instructions for directing the station 202 to implement aspects of various embodiments of the invention. The software components (programmed instructions and data) may alternatively be embodied on a computer readable medium (such as a CD disk or floppy disk) which may be used for providing the components to the memory 500. Alternatively, the programmed instructions may be embedded in a computer-readable, signal-bearing medium that is uploaded to a network by a vendor or supplier of the software components and this signal-bearing medium may be downloaded through an interface (e.g. 211, 230, and 240) to the station 202 from the network by end users or potential buyers.

Persons of skill in the art will appreciate that in some instances, no verified candidate may be available to be provided. For example, the misspelled word may in fact be correct but be in a language foreign to the dictionary, be an individual's name and so forth. However, the empty list may be shown in the GUI and a user permitted to accept the word or replace it on demand.

Though not shown, to speed the providing of candidates, fewer than all potential replacement candidates may be generated, verified and provided. A subset of the corrections, typically those related to most probable errors, may be selected and applied. A user may be prompted to have a further list provided if the intended word is not present in the list provide.

The corrections are typically selected for applying in accordance with the frequency of such errors in text composition. Selection may also be responsive to user preferences. For example a user may be provided with an option to re-order the selection of corrections or remove or add correction types. As well, a user's selection of a candidate replacement from the provide list may be monitored and the frequency of error types determined to adapt the selection of corrections. Thus a more personal frequency of errors can be determined.

In some embodiments, corrections may be limited to typographical errors without regard for spelling type errors. Spelling corrections are more language dependant and typically vary when correcting English versus non-English words. Moreover, when correcting commands or other terms which are computer-language oriented, spelling errors may be less important than typographical errors in terms of frequency.

Alternative spell checking approaches are well-known in the art and may adapt a Bloom Filter dictionary. For example, N-gram evaluations whereby portions (e.g. two, three or four character portions) of a word rather than a whole are evaluated against common letter combinations in a particular language may be efficiently implemented. However, false positive may be encountered.

Though described with reference to a mobile station device, persons of ordinary skill in the art will appreciate that the user interface and methods herein described may be usefully incorporated into other computing devices which may not be mobile such as personal computers, workstations, telephone handsets and the like.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method for correcting a misspelled word in text composition, comprising:
applying one or more corrections to the misspelled word to generate a candidate replacement for replacing the misspelled word, each of said one or more corrections defined in accordance with common errors for text composition;
verifying the spelling correctness of the candidate replacement; and
providing said candidate replacement to replace the misspelled word in response to said verifying.

2. The method of claim 1 comprising defining a plurality of corrections in accordance with common errors for text composition; selecting said one or more corrections from said plurality of corrections and, for each selection of said one or more corrections, repeating said applying, verifying and providing steps for generating a plurality of candidate replacements.

3. The method of claim 2 wherein said selecting step comprises selecting corrections in response to a relative frequency of the errors to be corrected for generating candidate replacements according to an expected likeliness of correctness.

4. The method of any one of claims 2 to 3 wherein said selecting step comprises selecting corrections in response to a user's preference.

5. The method of any one of claims 2 to 4 wherein said selecting step is adaptive to select corrections in response to a user's text composition habits.

6. The method of any one of claims 1 to 5 wherein said verifying step comprises determining whether the replacement candidate is present in a dictionary of correctly spelled words.

7. The method of any one of claims 1 to 6 comprising determining the misspelled word from the text composition.

8. The method of claim 7 wherein the step of determining the misspelled word comprises determining whether a portion of the text composition is present in a dictionary of correctly spelled words and defining the misspelled word in response.

9. The method of any one of claims 1 to 8 wherein the common errors are determined from common typographical errors and common spelling errors in accordance with a relative frequency of said common typographical errors and common spelling in text composition.

10. An apparatus for correcting a misspelled word in text composition, comprising:
a storage medium having stored therein a plurality of programming instructions and a processor coupled to the storage medium to execute the programming instructions to enable the apparatus to:
apply one or more corrections to the misspelled word to generate a candidate replacement for replacing the misspelled word, each of said corrections defined in accordance with common errors for text composition;
verify the spelling correctness of the candidate replacement; and
provide said candidate replacement to replace the misspelled word in response to the spelling correctness.

11. The apparatus of claim 10 wherein the programming instructions further enable the apparatus to define a plurality of corrections in accordance with common errors for text composition; select said one or more corrections from said plurality of correction; apply each selection of said one or more corrections to the misspelled word to generate a candidate replacement for replacing the misspelled word, each of said corrections defined in accordance with common errors for text composition; verify the spelling correctness of the candidate replacement; and provide said candidate replacement to replace the misspelled word in response to the spelling correctness to generate a plurality of candidate replacements.

12. The apparatus of claim 11 wherein the programming instructions enable the apparatus to select corrections in response to a relative frequency of the errors to be corrected to generate candidate replacements according to an expected likeliness of correctness.

13. The apparatus of any one of claims 11 to 12 wherein the programming instructions further enable the apparatus to select corrections in response to a user's preference.

14. The apparatus of any one of claims 11 to 13 wherein the programming instructions further enable the apparatus to adaptively select corrections in response to a user's text composition habits.

15. The apparatus of claim 10 wherein the programming instructions further enable the apparatus to determining whether the replacement candidate is present in a dictionary of correctly spelled words to verify the spelling correctness.

16. The apparatus of any one of claims 10 to 15 wherein the programming instructions further enable the apparatus to determine the misspelled word from the text composition.

17. The apparatus of claim 16 wherein the programming instructions enable the apparatus to determine whether a portion of the text composition is present in a dictionary of correctly spelled words and define the misspelled word in response.

18. The apparatus of any one of claims 10 to 17 wherein the common errors are determined from common typographical errors and common spelling errors in accordance with a relative frequency of said common typographical errors and common spelling in text composition.

19. A machine readable medium comprising program code means executable on a processor of the apparatus of any of claims 10 to 18 for implementing the method of any of claims 1 to 9.

20. A wireless communications device including the apparatus of any of claims 10 to 18.

21. A communications system including at least one wireless communications device according to claim 20.

## Amended claims

### Amended claims in accordance with Rule 86(2) EPC.

**1.** A method for correcting a misspelled word in text composition on an electronic device (102, 202) having a user interface (114, 232) for inputting text, comprising:
applying one or more corrections to the misspelled word to generate a candidate replacement for replacing the misspelled word, each of said one or more corrections defined in accordance with common errors for text composition;
verifying the spelling correctness of the candidate replacement;
checking the misspelled word against a list of common misspellings; and
providing said candidate replacement to replace the misspelled word in response to said verifying and said checking.

**2.** The method of claim 1 comprising defining a plurality of corrections in accordance with common errors for text composition; selecting said one or more corrections from said plurality of corrections and, for each selection of said one or more corrections, repeating said applying, verifying, checking and providing steps for generating a plurality of candidate replacements.

**3.** The method of claim 2 wherein said selecting step comprises selecting corrections in response to a relative frequency of the errors to be corrected for generating candidate replacements according to an expected likeliness of correctness.

**4.** The method of any one of claims 2 to 3 wherein said selecting step comprises selecting corrections in response to a user's preference.

**5.** The method of any one of claims 2 to 4 wherein said selecting step is adaptive to select corrections in response to a user's text composition habits.

**6.** The method of any one of claims 1 to 5 wherein said verifying step comprises determining whether the replacement candidate is present in a dictionary of correctly spelled words.

**7.** The method of any one of claims 1 to 6 comprising determining the misspelled word from the text composition.

**8.** The method of claim 7 wherein the step of determining the misspelled word comprises determining whether a portion of the text composition is present in a dictionary of correctly spelled words and defining the misspelled word in response.

**9.** The method of any one of claims 1 to 8 wherein the common errors are determined from common typographical errors and common spelling errors in accordance with a relative frequency of said common typographical errors and common spelling in text composition.

**10.** An apparatus (102, 202) for correcting a misspelled word in text composition, said apparatus having a user interface (114, 232) for inputting text, the apparatus comprising:
a storage medium (224, 500) having stored therein a plurality of programming instructions and a processor (238) coupled to the storage medium to execute the programming instructions to enable the apparatus to:
apply one or more corrections to the misspelled word to generate a candidate replacement for replacing the misspelled word, each of said corrections defined in accordance with common errors for text composition;
verify the spelling correctness of the candidate replacement;
check the misspelled word against a list of common misspellings for the candidate replacement; and
provide said candidate replacement to replace the misspelled word in response to the spelling correctness and based on whether the misspelled word is a common misspelling of the candidate replacement.

**11.** The apparatus of claim 10 wherein the programming instructions further enable the apparatus (102, 202) to define a plurality of corrections in accordance with common errors for text composition; select said one or more corrections from said plurality of correction; apply each selection of said one or more corrections to the misspelled word to generate a candidate replacement for replacing the misspelled word, each of said corrections defined in accordance with common errors for text composition; verify the spelling correctness of the candidate replacement; and provide said candidate replacement to replace the misspelled word in response to the spelling correctness to generate a plurality of candidate replacements.

**12.** The apparatus of claim 11 wherein the programming instructions enable the apparatus to select corrections in response to a relative frequency of the errors to be corrected to generate candidate replacements according to an expected likeliness of correctness.

**13.** The apparatus of any one of claims 11 to 12 wherein the programming instructions further enable the apparatus (102, 202) to select corrections in response to a user's preference.

**14.** The apparatus of any one of claims 11 to 13 wherein the programming instructions further enable the apparatus (102, 202) to adaptively select corrections in response to a user's text composition habits.

**15.** The apparatus of claim 10 wherein the programming instructions further enable the apparatus (102, 202) to determining whether the replacement candidate is present in a dictionary of correctly spelled words to verify the spelling correctness.

**16.** The apparatus of any one of claims 10 to 15 wherein the programming instructions further enable the apparatus (102, 202) to determine the misspelled word from the text composition.

**17.** The apparatus of claim 16 wherein the programming instructions enable the apparatus (102, 202) to determine whether a portion of the text composition is present in a dictionary of correctly spelled words and define the misspelled word in response.

**18.** The apparatus of any one of claims 10 to 17 wherein the common errors are determined from common typographical errors and common spelling errors in accordance with a relative frequency of said common typographical errors and common spelling in text composition.

**19.** A machine readable medium (224, 500) comprising program code means executable on a processor (238) of the apparatus (102, 202) of any of claims 10 to 18 for implementing the method of any of claims 1 to 9.

**20.** A wireless communications device (102, 202) comprising the apparatus of any of claims 10 to 18.

**21.** A communications system (100) comprising at least one wireless communications device (102, 202) according to claim 20.
